# EUROPEAN PATENT APPLICATION

(11) **EP 4 601 145 A1**
(43) Date of publication of application: **13.08.2025**
(21) Application number: 23887689.0
(22) Date of filing: 27.09.2023
(51) Int. Cl.: H02J 3/28

(54) **ENERGY STORAGE VALVE CONTROL SYSTEM AND ENERGY STORAGE DEVICE**

(30) Priority: 08.11.2022 CN 202222972415 U
(71) Applicant: Contemporary Amperex Future Energy Research Institute (Shanghai) Limited, Shanghai 200241 (CN)
(72) Inventor: FAN, Dashuai, Shanghai 200241 (CN); LU, Yanhua, Shanghai 200241 (CN); YU, Dongxu, Shanghai 200241 (CN); JI, Panpan, Shanghai 200241 (CN); LIANG, Pengfei, Shanghai 200241 (CN); WANG, Sheng, Shanghai 200241 (CN); SU, Tan, Shanghai 200241 (CN); ZHU, Jianbin, Shanghai 200241 (CN)
(74) Representative: Ziebig Hengelhaupt Intellectual Property Attorneys Patentanwaltskanzlei PartGmbB
(86) International application number: PCT/CN2023/122122
(87) International publication number: WO 2024/098996

(57) **Abstract**

The present application relates to an energy storage valve control system and energy storage equipment. Redundancy configuration is performed for the main control equipment and the expansion equipment, respectively. Through one main control equipment and one expansion equipment, the protection and control of the energy storage equipment in the energy storage equipment can be realized, while the other main control equipment and the other expansion equipment serve as backups. The expansion equipment in the backup state is connected to the expansion equipment in the operating state to realize monitoring of the expansion equipment in the operating state, and the main control equipment in the backup state is connected to the main control equipment in the operating state to realize monitoring of the main control equipment in the operating state. When an abnormality occurs during monitoring, it is possible to switch to the main control equipment in the backup state and/or the expansion equipment in the backup state in time.

## Description

### CROSS-REFERENCE TO RELATED APPLICATIONS

The present application claims the priority of Chinese Patent Application No. 2022229724158, filed on November 08, 2022, and entitled "Energy Storage Valve Control System and Energy Storage Equipment", which is incorporated herein by reference in its entirety.

### TECHNICAL FIELD

The present application relates to the energy storage technology field, and in particular, to an energy storage valve control system and energy storage equipment.

### BACKGROUND

With the development of the smart grid, energy storage technology has become an important part of its development process. Among various energy storage technologies, high-voltage direct-connected energy storage has attracted increasing attention and development due to its highly modular structure, which can meet the needs of high efficiency, high reliability, economic efficiency, and safety.

At present, when high-voltage direct-connected energy storage equipment is configured, each power module is connected to the energy storage valve control system, and the power modules are networked. However, this configuration method will cause the energy storage valve control system to exit operation when a single energy storage module has a communication circuit fault or a single interface board fault, which seriously affects the operational reliability of the high-voltage direct-connected energy storage equipment.

### SUMMARY

Based on this, the present application provides an energy storage valve control system and energy storage equipment, which can effectively improve the operational reliability of high-voltage direct-connected energy storage equipment.

In a first aspect, the present application provides an energy storage valve control system, including a first main control equipment, a second main control equipment, a first expansion equipment, and a second expansion equipment, the first main control equipment is connected to the second main control equipment, the first main control equipment and the second main control equipment are respectively connected to the first expansion equipment, the first expansion equipment is used to connect to an energy storage equipment, the first main control equipment and the second main control equipment are respectively connected to the second expansion equipment, the first expansion equipment is connected to the second expansion equipment, and the second expansion equipment is used to connect to the energy storage equipment.

The above energy storage valve control system provides redundancy configuration for the main control equipment and the expansion equipment, respectively. In actual operation, one main control equipment and one expansion equipment can realize the protection and control of the energy storage equipment, while the other main control equipment and expansion equipment serve as backup. The expansion equipment in the backup state is connected to the expansion equipment in the operating state to realize the monitoring of the expansion equipment in the operating state, and the main control equipment in the backup state is connected to the main control equipment in the operating state to realize the monitoring of the main control equipment in the operating state. When an abnormality is monitored, it is possible to switch to the main control equipment in the backup state and/or the expansion equipment in the backup state in time. Through this solution, the redundancy configuration of the energy storage valve control system is performed to alleviate the situation that the energy storage valve control system exits operation when a single energy storage equipment communication circuit fault or a single expansion equipment fault occurs, which can effectively improve the operational reliability of energy storage equipment such as high-voltage direct connection type.

In some embodiments, when the energy storage valve control system is running, any one of the first expansion equipment and the second expansion equipment is connected to the energy storage equipment. If there is an abnormal development trend in the energy storage equipment, the other expansion equipment replaces the currently running expansion equipment to connect to the energy storage equipment.

According to the above solution, any one of the first expansion equipment and the second expansion equipment serves as a running expansion equipment and is connected to the energy storage equipment, and the other one serves as a backup and is connected to the running expansion equipment to realize the acquisition of operating parameters of the energy storage equipment. The redundancy switching of the expansion equipment can be performed when there is an abnormal development trend in the energy storage equipment, which improves the operational reliability of the energy storage valve control system when there is an abnormal development trend in the energy storage equipment.

**In** some embodiments, when the energy storage valve control system is running, any one of the first main control equipment and the second main control equipment, and any one of the first expansion equipment and the second expansion equipment are in an operating state, and the other main control equipment and the other expansion equipment are in a cold standby state.

According to the above solution, one main control equipment and the expansion equipment are in the operating state, and the other main control equipment and the expansion equipment are in the cold standby state. All circuits between the main control equipment and the expansion equipment in the cold standby state and the energy storage equipment are disconnected, so that they are no longer connected to the energy storage equipment for operation, which can effectively reduce the operating power consumption of the energy storage valve control system.

In some embodiments, the first main control equipment includes a first cabinet and a first main controller, the first main controller is arranged inside the first cabinet, and the second main control equipment, the first expansion equipment, and the second expansion equipment are respectively connected to the first main controller.

And/or, in some embodiments, the second main control equipment includes a second cabinet and a second main controller, the second main controller is arranged inside the second cabinet, and the first main control equipment, the first expansion equipment, and the second expansion equipment are respectively connected to the second main controller.

According to the above solution, the first main control equipment and/or the second main control equipment are configured as a modular cabinet structure to improve the operational safety of the main controller in the main control equipment. At the same time, it is convenient to replace the first main control equipment and/or the second main control equipment when a fault occurs.

In some embodiments, the first expansion equipment includes a first expander, a first interface adapter, and a third cabinet, the first expander and the first interface adapter are respectively arranged inside the third cabinet, the first main control equipment, the second main control equipment, and the second expansion equipment are respectively connected to the first expander, the first expander is connected to the first interface adapter, and the first interface adapter is used to connect to the energy storage equipment.

According to the above solution, the first interface adapter and the first expander are arranged in the first expansion equipment at the same time, and the first expansion equipment is set as a modular cabinet structure, which not only realizes the connection of the energy storage equipment, but also improves the operational safety of the first interface adapter and the first expander. At the same time, when a fault occurs in the first expansion equipment, the first expansion equipment can be replaced as a whole, which improves the fault handling efficiency.

In some embodiments, the first expander includes a first expansion board and a second expansion board, the first main control equipment, the second main control equipment, and the second expansion equipment are respectively connected to the first expansion board, the first main control equipment, the second main control equipment, and the second expansion equipment are respectively connected to the second expansion board, and the first expansion board and the second expansion board are respectively connected to the first interface adapter.

According to the above solution, the first expansion board and the second expansion board are designed in a redundancy structure and transmit signals at the same time. When one of the expansion boards fails, the other expansion board can still realize the information interaction between the main control equipment and the energy storage equipment, which improves the operational reliability of the first expansion equipment.

In some embodiments, the second expansion equipment includes a second expander, a second interface adapter, and a fourth cabinet, the second expander and the second interface adapter are respectively arranged inside the fourth cabinet, the first main control equipment, the second main control equipment, and the first expansion equipment are respectively connected to the second expander, the second expander is connected to the second interface adapter, and the second interface adapter is used to connect to the energy storage equipment.

According to the above solution, the second interface adapter and the second expander are arranged in the second expansion equipment at the same time, and the second expansion equipment is set as a modular cabinet structure, which not only realizes the connection of the energy storage equipment, but also improves the operational safety of the second interface adapter and the second expander. At the same time, when a fault occurs in the second expansion equipment, the second expansion equipment can be replaced as a whole, which improves the fault handling efficiency.

In some embodiments, the second expander includes a third expansion board and a fourth expansion board, the first main control equipment, the second main control equipment, and the first expansion equipment are respectively connected to the third expansion board, the first main control equipment, the second main control equipment, and the first expansion equipment are respectively connected to the fourth expansion board, and the third expansion board and the fourth expansion board are respectively connected to the second interface adapter.

According to the above solution, the third expansion board and the fourth expansion board are designed in a redundancy structure and transmit signals at the same time. When one of the expansion boards fails, the other expansion board can still realize the information interaction between the main control equipment and the energy storage equipment, which improves the operational reliability of the second expansion equipment.

In some embodiments, the first expansion equipment further includes a first power board, the first power board is arranged inside the third cabinet, and the first expander and the first interface adapter are respectively connected to the first power board.

And/or, in some embodiments, the second expansion equipment further includes a second power board, the second power board is arranged inside the fourth cabinet, and the second expander and the second interface adapter are respectively connected to the second power board.

According to the above solution, a power board is arranged inside the third cabinet and/or the fourth cabinet to realize the power supply operation of the first expansion equipment and/or the second expansion equipment, which improves the operational endurance capability of the first expansion equipment and the second expansion equipment.

In some embodiments, the number of the first main control equipment, the second main control equipment, the first expansion equipment, and the second expansion equipment is one or more, respectively.

According to the above solution, one or more sets of mutually redundant energy storage valve control subsystems can be set according to actual scenarios, so that all energy storage equipment can be connected to the energy storage valve control system for operation, which improves the operational reliability of the energy storage equipment.

In a second aspect, the present application provides an energy storage equipment, including an energy storage equipment and the energy storage valve control system according to any one of the above, the first expansion equipment and the second expansion equipment are respectively connected to the energy storage equipment.

The above energy storage equipment provides redundancy configuration for the main control equipment and the expansion equipment, respectively. In actual operation, one main control equipment and one expansion equipment can realize the protection and control of the energy storage equipment, while the other main control equipment and expansion equipment serve as backup. The expansion equipment in the backup state is connected to the expansion equipment in the operating state to realize the monitoring of the expansion equipment in the operating state, and the main control equipment in the backup state is connected to the main control equipment in the operating state to realize the monitoring of the main control equipment in the operating state. When an abnormality is monitored, it is possible to switch to the main control equipment in the backup state and/or the expansion equipment in the backup state in time. Through this solution, the redundancy configuration of the energy storage valve control system is performed to alleviate the situation that the energy storage valve control system exits operation when a single energy storage equipment communication circuit fault or a single expansion equipment fault occurs, which can effectively improve the operational reliability of energy storage equipment such as high-voltage direct connection type.

In some embodiments, the energy storage equipment includes a power module and an energy storage module, the first expansion equipment and the second expansion equipment are respectively used to connect to the power module, and the power module is connected to the energy storage module.

According to the above solution, the energy storage equipment specifically includes two parts: a power module and an energy storage module. Under the control of the energy storage valve control system, it can realize electrical energy storage and the charge and discharge control of the energy storage module, and finally realize high-voltage direct-connected energy storage, which is convenient for electrical energy storage and retrieval.

The above description is merely an overview of the technical solutions of the present application. For a clearer understanding of the technical means of the present application, the present application can be carried out in accordance with the content of the description, and in order to make the above and other objectives, characteristics, and advantages of the present application apparent and comprehensible, specific embodiments of the present application are described below.

### DESCRIPTION OF DRAWINGS

In order to more clearly illustrate the technical solutions of the embodiments of the present application, the drawings required to be used in the embodiments of the present application will be briefly introduced below. Obviously, the drawings described below are only some embodiments of the present application. For persons of ordinary skill in the art, other drawings can also be obtained from the drawings without creative work. In the accompanying drawings:
FIG. 1 is a schematic diagram of an application scenario of an energy storage valve control system according to some embodiments of the present application;
FIG. 2 is a schematic structural diagram of an energy storage valve control system according to some embodiments of the present application;
FIG. 3 is a schematic structural diagram of an energy storage valve control system according to other embodiments of the present application;
FIG. 4 is a schematic structural diagram of an energy storage valve control system according to yet other embodiments of the present application;
FIG. 5 is a schematic structural diagram of an energy storage valve control system according to still other embodiments of the present application;
FIG. 6 is a schematic structural diagram of an energy storage equipment according to some embodiments of the present application.

Reference numerals in specific implementations are as follows:
Energy storage valve control system - 10, energy storage equipment 12; first main control equipment - 20, second main control equipment - 22, first expansion equipment - 24, second expansion equipment - 26; first cabinet - 31, first main controller - 33, second cabinet - 35, second main controller - 37; first expander - 41, third cabinet - 42, first interface adapter - 43, first expansion board - 411, second expansion board - 412; second expander - 51, fourth cabinet - 52, second interface adapter 53, third expansion board - 511, fourth expansion board - 512.

### DESCRIPTION OF EMBODIMENTS

In order to facilitate the understanding of the present application, the present application will be described more fully below with reference to the relevant drawings. Preferred embodiments of the present application are given in the drawings. However, the present application can be implemented in many different forms and is not limited to the embodiments described herein. On the contrary, the purpose of providing these embodiments is to make the understanding of the disclosed content of the present application more thorough and comprehensive.

In order to make the objects, technical solutions and advantages of the present application clearer, the present application will be further described in detail below with reference to the drawings and embodiments. It should be understood that the specific embodiments described herein are only used to explain the present application and are not used to limit the present application.

Embodiments of the technical solutions of the present application are described in detail below with reference to the drawings. The following embodiments are only used to more clearly illustrate the technical solutions of the present application, and thus are used as examples only, and are not intended to limit the protection range of the present application.

Unless defined otherwise, all technical and scientific terms used herein have the same meaning as commonly understood by a person skilled in the art to which the present application belongs; the terms used herein are used for describing particular embodiments only and are not intended to limit the present application; and the terms "comprising", "including", and "having" and any variations thereof in the description, claims and the above drawings of the present application are intended to cover non-exclusive inclusion.

In the description of the embodiments of the present application, the technical terms "first", "second", and the like are used only for distinguishing between different objects, but cannot be construed to indicate or imply relative importance or implicitly indicate the number, specific order, or primary/secondary relationship of indicated technical features. In the description of the embodiments of the present application, "a plurality of" means two or more unless specifically defined otherwise.

Reference to "an embodiment" herein means that a particular feature, structure, or characteristic described with reference to the embodiment can be included in at least one embodiment of the present application. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments.

In the description of the embodiments of the present application, the term "and/or" merely describes an association relationship of associated objects, indicating that three relationships may exist, for example, A and/or B may mean that A exists alone, A and B exist simultaneously, or B exists alone. In addition, the character "/" herein generally indicates that associated objects are in a "or" relationship.

In the description of the embodiments of the present application, unless otherwise specified and defined explicitly, the technical terms "mounted", "connected to", "connect", "fixed", and the like should be understood in a broad sense, which, for example, may be understood as fixed connection, detachable connection or integral connection, may be understood as mechanical connection, or electrical connection, or may be understood as direct connection, indirect connection via an intermediate medium, or communication between the interiors of two elements or interactions between two elements. A person of ordinary skill in the art may understand the specific meanings of the above terms in the embodiments of the present application according to specific situations.

High-voltage direct-connected energy storage equipment, when experiencing a communication circuit fault in a single energy storage module or an interface board fault, causes the energy storage valve control system to cease operation, severely affecting the operational reliability of the high-voltage direct-connected energy storage equipment. In view of these issues, the present application employs a redundancy configuration for the main control equipment and the expansion equipment. Protection and control of the energy storage equipment within an energy storage system are achieved through one main control equipment and one expansion equipment, while the other main control equipment and the other expansion equipment serve as backups, enabling a timely switch to the main control equipment and/or the expansion equipment in the backup state upon occurrence of an abnormality. This approach mitigates scenarios where the energy storage valve control system ceases operation due to a communication circuit fault in a single energy storage equipment or a fault in a single expansion equipment, thereby enhancing the operational reliability of energy storage equipment such as high-voltage direct-connected types.

High-voltage direct-connected energy storage, due to a highly modular structure thereof, meets demands for high efficiency, high reliability, economic efficiency, and safety, and has gradually gained development and application. Currently, high-voltage direct-connected energy storage equipment typically includes a plurality of cascaded sub-modules (i.e., energy storage equipment). Connections between the cascaded sub-modules and a control system (i.e., energy storage valve control system) are implemented at the expansion chassis level. Depending on the number of sub-modules connected, one or more expansion chassis are configured. Each optical port within each expansion chassis is connected to a sub-module via a pair of transceiver optical fibers in a one-to-one manner, and each expansion chassis is connected to a main control chassis of the control system. Given the large number of sub-modules, communication stability between each sub-module and the control system is particularly critical and serves as a necessary prerequisite for maintaining stable operation of the high-voltage direct-connected energy storage equipment.

Through research, it has been found that either the communication circuit fault of any single sub-module or the fault of the connection board in the expansion chassis connected to the sub-module will cause the sub-module under the jurisdiction of the control system to exit operation, thereby affecting the stable operation of the entire high-voltage direct-connected energy storage equipment, resulting in low operational reliability of the high-voltage direct-connected energy storage equipment.

In order to alleviate the above problems, through research, it has been found that the number of control systems can be increased, and redundancy configuration can be performed on the control systems connected to each sub-module. In the actual operation process, one group of control systems is used as the operating control system, and the other group of control systems is used as the backup. At the same time, the backup control system monitors the operating control system in real time. When it is monitored that the operating control system cannot meet the protection and control of the sub-module, the backup control system takes over and starts the backup control system to realize the same protection and control functions as the operating control system.

Based on the above considerations, in order to improve the operational reliability of high-voltage direct-connected energy storage equipment, redundancy configuration can be performed on the main control chassis and expansion chassis in the energy storage valve control system to form two mutually redundant energy storage valve control subsystems. When one energy storage valve control subsystem is in operation, the other energy storage valve control subsystem is in the backup state and monitors the energy storage valve control subsystem in the operating state. Specifically, the expansion chassis of the energy storage valve control subsystem in the backup state monitors the expansion chassis of the energy storage valve control subsystem in the operating state. In this way, during the operation of the high-voltage direct-connected energy storage equipment, if the communication circuit of any single sub-module fails, or the connection board in the expansion chassis connected to the sub-module fails, it will be detected by the backup expansion chassis. Finally, the operating expansion chassis will be cut off, and the backup expansion chassis will be used to connect to the energy storage equipment. Thus, the situation where any single sub-module communication circuit fault or the connection board fault in the expansion chassis connected to the sub-module affects the operation of the high-voltage direct-connected energy storage equipment is alleviated, and the operational reliability of the high-voltage direct-connected energy storage equipment is improved.

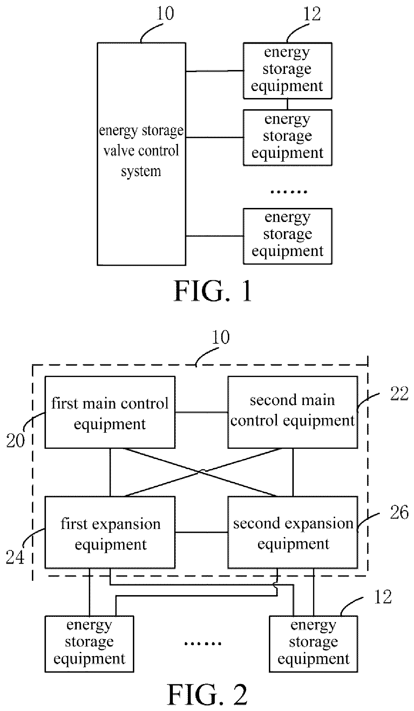

The energy storage valve control system provided by the present application can be applied in the application environment shown in FIG. 1, wherein, the energy storage valve control system 10 is in communication connection with the energy storage equipment 12. During operation, the energy storage valve control system 10 can obtain the operating parameter of the energy storage equipment 12 in real time and output control signal to the energy storage equipment 12 to realize the protection and control of the energy storage equipment 12. It can be understood that the connection method between the energy storage valve control system 10 and the energy storage equipment 12 is not unique, as long as it can realize effective signal transmission between the two. For example, in a more detailed embodiment, the energy storage valve control system 10 and the energy storage equipment 12 are connected by optical fiber, and a pair of transceiver optical fiber is provided between each energy storage equipment 12 and the energy storage valve control system 10 to realize signal interaction between the two.

It should be pointed out that the specific number of the energy storage equipment 12 is not unique, and it is selected according to the actual application scenario or the expansion chassis of the energy storage valve control system 10, as long as each energy storage equipment 12 is in communication connection with the expansion chassis. For example, in a more detailed embodiment, the number of the energy storage equipment 12 can be set to 60.

Please refer to FIG. 2, the present application provides an energy storage valve control system, including a first main control equipment 20, a second main control equipment 22, a first expansion equipment 24 and a second expansion equipment 26, the first main control equipment 20 is connected to the second main control equipment 22, the first main control equipment 20 and the second main control equipment 22 are respectively connected to the first expansion equipment 24, the first expansion equipment 24 is used to connect to an energy storage equipment 12, the first main control equipment 20 and the second main control equipment 22 are respectively connected to the second expansion equipment 26, the first expansion equipment 24 is connected to the second expansion equipment 26, and the second expansion equipment 26 is used to connect to an energy storage equipment 12.

Specifically, the first expansion equipment 24 is used to connect the energy storage equipment 12, and the second expansion equipment 26 is also used to connect the energy storage equipment 12. In the actual operation process, the first expansion equipment 24 is selected to connect to the energy storage equipment 12 or the second expansion equipment 26 is selected to connect to the energy storage equipment 12 according to the actual scenario. The main control equipment is the equipment that realizes the control function in the energy storage valve control system 10; the expansion equipment is the equipment used to expand the connection ports; the energy storage equipment 12 is the equipment that realizes electrical energy storage and the function of charge and discharge. In the technical solution of the present application, the number of main control equipment is set to two, the first main control equipment 20 and the second main control equipment 22 are redundant to each other, and the number of expansion equipment is set to two, the first expansion equipment 24 and the second expansion equipment 26 are redundant to each other. In the actual operation process, the first main control equipment 20 and the first expansion equipment 24 can form a set of energy storage valve control subsystem, and the second main control equipment 22 and the second expansion equipment 26 can form a set of energy storage valve control subsystem.

One of the two sets of energy storage valve control subsystems is in operation and connected to the energy storage equipment 12 for its protection and control; while the other set of energy storage valve control subsystem is in the backup state, and the connection between its expansion equipment and the energy storage equipment 12 is disconnected. However, since the first main control equipment 20 is connected to the second main control equipment 22, and the first expansion equipment 24 is connected to the second expansion equipment 26, the set of energy storage valve control subsystem in the backup state can monitor the energy storage valve control subsystem in the operating state. If an abnormality is monitored, the set of energy storage valve control subsystem in the backup state is switched to operation. Specifically, only the main control equipment can be switched, or only the expansion equipment can be switched, or both the main control equipment and the expansion equipment can be switched. The specific switching is based on the actual monitoring results.

It can be understood that, in another embodiment, the first main control equipment 20 and the second expansion equipment 26 can also be used as a set of energy storage valve control subsystem, and the second main control equipment 22 and the first expansion equipment 24 can be used as a set of energy storage valve control subsystem. One of the two sets of energy storage valve control subsystems is in operation and connected to the energy storage equipment 12 for its protection and control, while the other set of energy storage valve control subsystems is in the backup state. The redundant switching operation in actual operation is similar to the above embodiment, and will not be repeated here.

The above energy storage valve control system, with redundancy configuration for the main control equipment and the expansion equipment, in the actual operation process, through one main control equipment and one expansion equipment, it can realize the protection and control of the energy storage equipment in the energy storage equipment, and the other main control equipment and expansion equipment are used as backup. The expansion equipment in the backup state is connected to the expansion equipment in the operating state to realize monitoring of the expansion equipment in the operating state, and the main control equipment in the backup state is connected to the main control equipment in the operating state to realize monitoring of the main control equipment in the operating state. When an abnormality occurs in the monitoring, it can be switched to the main control equipment in the backup state and/or the expansion equipment in the backup state in time. Through this solution, the energy storage valve control system is redundantly configured to alleviate the situation where the energy storage valve control system exits operation when a single energy storage equipment communication circuit fault or a single expansion equipment fault occurs, which can effectively improve the operational reliability of high-voltage direct-connected and other types of energy storage equipment.

In some embodiments, when the energy storage valve control system is operating, any one of the first expansion equipment 24 and the second expansion equipment 26 is connected to the energy storage equipment 12, and if there is an abnormal development trend in the energy storage equipment 12, the other expansion equipment replaces the currently operating expansion equipment to connect to the energy storage equipment 12.

Specifically, in the solution of this embodiment, if it is found through monitoring that there is an abnormal development trend in the energy storage equipment 12, the expansion equipment of the energy storage valve control subsystem in the operating state is cut off, and the connection with each energy storage equipment 12 is disconnected. At the same time, each energy storage equipment 12 is connected to the expansion equipment of a set of energy storage valve control subsystem in the backup state.

It should be pointed out that, in one embodiment, when it is detected that the energy storage equipment 12 has an abnormal development trend, only the expansion equipment can be switched, and the main control equipment still uses the main control equipment of the energy storage valve control subsystem that was previously in operation. In another embodiment, it is also possible to switch the main control equipment and the expansion equipment at the same time when it is detected that the energy storage equipment 12 has an abnormal development trend, that is, to completely replace the set of energy storage valve control subsystems that were originally in the operating state, and use the main control equipment and expansion equipment of a set of energy storage valve control subsystems that were originally in the backup state to realize the protection and control of the energy storage equipment 12. How to switch specifically can be selected according to the actual scene.

To detect whether the energy storage equipment 12 has an abnormal development trend, in one embodiment, it can be detected and analyzed by the expansion equipment of a set of energy storage valve control subsystems in the backup state. In another embodiment, it can be detected and analyzed by the main control equipment of a set of energy storage valve control subsystems in the backup state. The specific method is not limited and can be selected according to the actual application scenario.

When performing abnormal development trend detection, firstly, the transmission signal of each energy storage equipment 12 and the expansion equipment is obtained through the expansion equipment of a set of energy storage valve control subsystems in the operating state, and then it is detected whether each transmission signal is normal, that is, it is detected whether there is a communication heartbeat indicator in the transmission signal within the communication cycle. If a single cycle communication abnormality occurs (including communication check failure, communication interruption or the communication heartbeat indicator changes in a non-preset rule), it indicates that there is an abnormal development trend at this location. If the abnormal development trend occurs continuously within a certain period of time (that is, the number of occurrences is greater than the occurrence count threshold), it is confirmed that the energy storage equipment 12 at the corresponding location has an abnormal development trend.

In the above solution, any one of the first expansion equipment 24 and the second expansion equipment 26 serves as the operating expansion equipment and is connected to the energy storage equipment 12, while the other one serves as a backup and is connected to the operating expansion equipment to obtain the operating parameter of the energy storage equipment 12. Redundant switching of the expansion equipment can be performed when the energy storage equipment 12 has an abnormal development trend, which improves the operational reliability of the energy storage valve control system when the energy storage equipment 12 has an abnormal development trend.

In some embodiments, when the energy storage valve control system is operating, any one of the first main control equipment 20 and the second main control equipment 22, and any one of the first expansion equipment 24 and the second expansion equipment 26 are in an operating state, and the other main control equipment and the other expansion equipment are in a cold standby state.

Specifically, the operating state is the state of being connected to the energy storage equipment 12 and being able to realize the protection and control of the energy storage equipment 12. The cold standby state, also known as the cold backup state, means that there are no safety measures on all sides of the currently connected equipment, and there are obvious disconnection points or discernible disconnection points on all sides of the equipment connected to it.

In the power system, the backup state includes the hot standby state and the cold standby state. Hot standby means that the equipment switch is disconnected, while the isolating switch is still in the closed position; in the cold standby state, while the switches of electrical equipment such as lines and busbars are disconnected, the isolating switches and related grounding switches on both sides are in the disconnected position. In the solution of this embodiment, the energy storage valve control subsystem in the backup state is specifically in the cold standby state. All the circuit connections between the energy storage valve control subsystem and the energy storage equipment 12 are disconnected. When it needs to be used, it is only necessary to close the corresponding circuits one by one.

It can be understood that, in another embodiment, the energy storage valve control subsystem in the backup state can also be set to the hot standby state, which only disconnects part of the connection in the energy storage equipment. When performing redundant switching, the number of points that need to be closed is relatively small, so it has the advantage of fast switching efficiency.

According to the above solution, one main control equipment and expansion equipment are in the operating state, and the other main control equipment and expansion equipment are in the cold standby state. The circuits between the main control equipment and expansion equipment in the cold standby state and the energy storage equipment are all in a disconnected state, so that they are no longer connected to the energy storage equipment for operation, which can effectively reduce the operating power consumption of the energy storage valve control system.

In one embodiment, the first expansion equipment 24 and the second expansion equipment 26 are respectively provided with optical fiber transceiver interfaces, and are connected to the energy storage equipment 12 through optical fibers. Therefore, when an expansion equipment is used as the expansion equipment of a set of energy storage valve control subsystems in the operating state, it is only necessary to control the corresponding optical fiber transceiver interface to emit light to realize the corresponding signal transmission function. While in the expansion equipment of a set of energy storage valve control subsystems in the cold standby state, the optical fiber transceiver interface does not emit light and is disconnected from the energy storage equipment 12, which can effectively reduce power consumption.

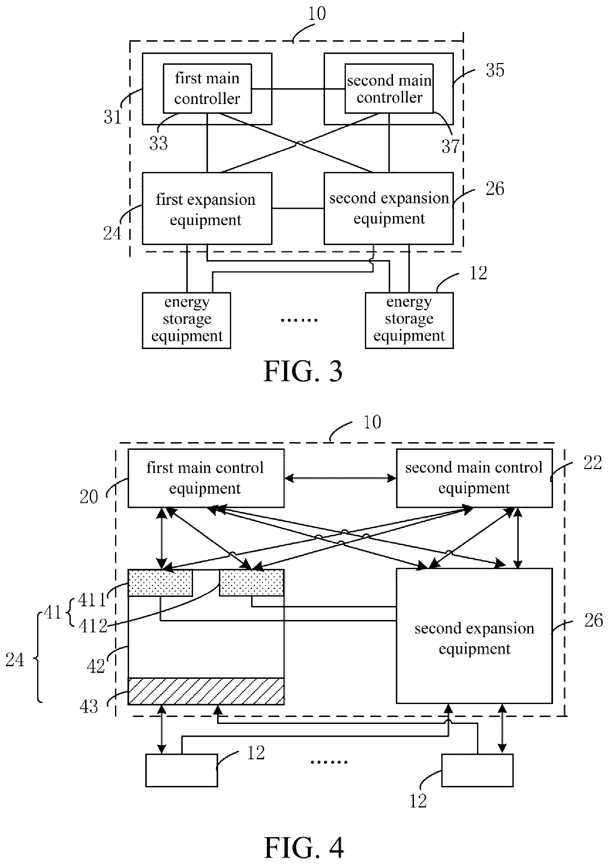

Please refer to FIG. 3, in some embodiments, the first main control equipment 20 includes a first cabinet 31 and a first main controller 33, the first main controller 33 is disposed inside the first cabinet 31, and the second main control equipment 22, the first expansion equipment 24, and the second expansion equipment 26 are respectively connected to the first main controller 33.

And/or, in some embodiments, the second main control equipment 22 includes a second cabinet 35 and a second main controller 37, the second main controller 37 is disposed inside the second cabinet 35, and the first main control equipment 20, the first expansion equipment 24, and the second expansion equipment 26 are respectively connected to the second main controller 37.

Specifically, the specific type of the main control equipment is not unique. In the solution of this embodiment, the main control equipment includes at least a main controller and a cabinet. The main controller used for protection and control of the energy storage equipment 12 is arranged inside the cabinet to improve the operational safety of the main controller. At the same time, this structural design makes the main control equipment a modular structure, which is convenient for replacing the main control equipment when the main control equipment fails.

It can be understood that, in actual configuration, in one embodiment, only the first main control equipment 20 can be set as a cabinet structure, and in another embodiment, only the second main control equipment 22 can be set as a cabinet structure. In a more detailed embodiment, both the first main control equipment 20 and the second main control equipment 22 can be set as a cabinet structure, which can be selected according to actual needs.

According to the above solution, the first main control equipment 20 and/or the second main control equipment 22 are configured as a modular cabinet structure to improve the operational safety of the main controller in the main control equipment. At the same time, it is convenient to replace the first main control equipment 20 and/or the second main control equipment 22 when a fault occurs.

In some embodiments, please refer to FIG. 4, the first expansion equipment 24 includes a first expander 41, a first interface adapter 43, and a third cabinet 42, the first expander 41 and the first interface adapter 43 are respectively disposed inside the third cabinet 42, the first main control equipment 20, the second main control equipment 22, and the second expansion equipment 26 are respectively connected to the first expander 41, the first expander 41 is connected to the first interface adapter 43, and the first interface adapter 43 is used to connect to the energy storage equipment 12.

Specifically, the specific type of the first expansion equipment 24 is not unique. In the solution of this embodiment, similar to the main control equipment in the above embodiment, the first expansion equipment 24 also adopts a cabinet structure and is set in a modular manner. The first expander 41 is a device used to increase the number of input and output points and realize multi-point connection. The first interface adapter 43 serves as a connection port for the energy storage equipment 12, and is a device that realizes connection with one or more energy storage equipment 12.

It can be understood that the specific type of the first interface adapter 43 is not unique. According to the number of energy storage equipment 12 to be connected in the actual application scenario, the first interface adapter 43 will also be different, as long as the selected first interface adapter 43 can meet the connection of the corresponding number of energy storage equipment 12. For example, in a more detailed embodiment, the number of energy storage equipment 12 to be connected is 60, then correspondingly, the first interface adapter 43 is a device with 60 or more pairs of optical fiber transceiver interfaces, so as to simultaneously realize information interaction with 60 energy storage equipment 12.

It should be pointed out that, in one embodiment, the first interface adapter 43 has an optical-electrical signal conversion function. In the solution of this embodiment, the first interface adapter 43 and the energy storage equipment 12 are connected through a transceiver optical fiber, and the operating status parameters of the energy storage equipment 12 are transmitted to the first interface adapter 43 in the form of optical signals. In order to realize that the signals received by the first interface adapter 43 can be transmitted upwards and finally reach the first main control equipment 20 or the second main control equipment 22, the first interface adapter 43 needs to perform optical-electrical conversion on the received optical signals to obtain operating status parameters in the form of electrical signals.

According to the above solution, a first interface adapter 43 and a first expander 41 are disposed in the first expansion equipment 24 at the same time, and the first expansion equipment 24 is configured as a modular cabinet structure, which not only enables connection to the energy storage equipment 12, but also improves the operational safety of the first interface adapter 43 and the first expander 41. At the same time, when a fault occurs in the first expansion equipment 24, the first expansion equipment 24 can be replaced as a whole, improving the fault handling efficiency.

In some embodiments, please continue to refer to FIG. 4, the first expander 41 includes a first expansion board 411 and a second expansion board 412, the first main control equipment 20, the second main control equipment 22, and the second expansion equipment 26 are respectively connected to the first expansion board 411, the first main control equipment 20, the second main control equipment 22, and the second expansion equipment 26 are respectively connected to the second expansion board 412, and the first expansion board 411 and the second expansion board 412 are respectively connected to the first interface adapter 43.

Specifically, in the solution of this embodiment, the first expander 41 includes a first expansion board 411 and a second expansion board 412. The connection methods of the first expansion board 411 and the second expansion board 412 are the same, both are connected to the first main control equipment 20, the second main control equipment 22 and the first interface adapter 43 at the same time, and can receive control signals from the first main control equipment 20 or the second main control equipment 22, feed back the operating status parameters of the energy storage equipment 12 to the first main control equipment 20 and/or the second main control equipment 22, and send the control signals to the first interface adapter 43 or receive the operating status parameters sent by the first interface adapter 43.

According to the above solution, the first expansion board 411 and the second expansion board 412 are designed with a redundant structure, and signals are transmitted simultaneously. When one of the expansion boards fails, the other expansion board can still be used to realize information interaction between the main control equipment and the energy storage equipment 12, improving the operational reliability of the first expansion equipment 24.

It should be pointed out that, in other embodiments, the first expander 41 can also be set to three or even more expansion boards, and the connection methods of each expansion board are the same, which can be selected according to actual needs, and will not be repeated here.

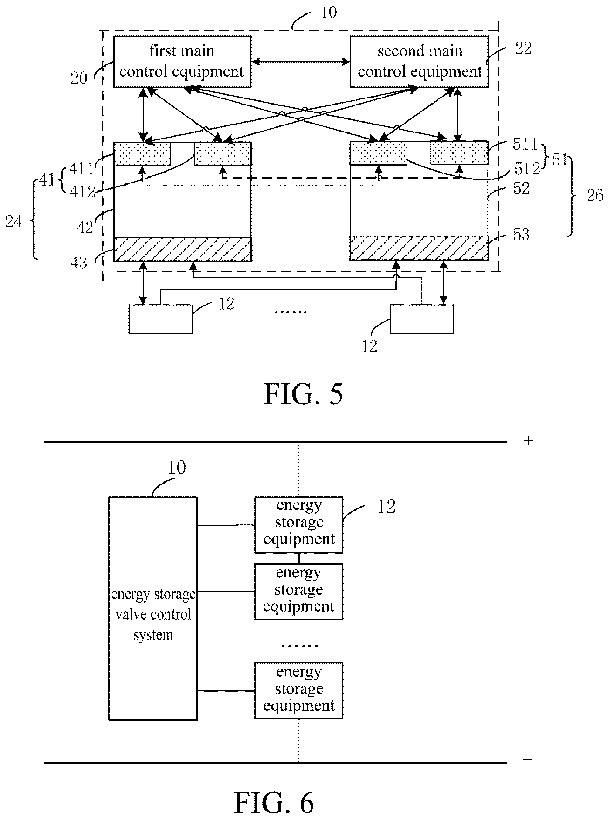

Please refer to FIG. 5, in some embodiments, the second expansion equipment 26 includes a second expander 51, a second interface adapter 53, and a fourth cabinet 52, the second expander 51 and the second interface adapter 53 are respectively disposed inside the fourth cabinet 52, the first main control equipment 20, the second main control equipment 22, and the first expansion equipment 41 are respectively connected to the second expander 51, the second expander 51 is connected to the second interface adapter 53, and the second interface adapter 53 is used to connect to the energy storage equipment 12.

Specifically, similar to the above first expansion equipment 24, the second expansion equipment 26 also adopts a cabinet structure and is set in a modular manner. The second expander 51 is a device used to increase the number of input and output points and realize multi-point connection. The second interface adapter 53 serves as a connection port for the energy storage equipment 12 and is a device that realizes connection with one or more energy storage equipment 12.

It can be understood that the specific type of the second interface adapter 53 is not unique. According to the number of energy storage equipment 12 to be connected in the actual application scenario, the second interface adapter 53 will also be different, as long as the selected second interface adapter 53 can meet the connection of the corresponding number of energy storage equipment 12. For example, in a more detailed embodiment, the number of energy storage equipment 12 to be connected is 60, then correspondingly, the second interface adapter 53 is a device with 60 or more pairs of optical fiber transceiver interfaces to simultaneously realize information interaction with 60 energy storage equipment 12.

It should be pointed out that, in one embodiment, the second interface adapter 53 has an optical-electrical signal conversion function. In the solution of this embodiment, the second interface adapter 53 and the energy storage equipment 12 are connected through a transceiver optical fiber, and the operating status parameters of the energy storage equipment 12 are transmitted to the second interface adapter 53 in the form of optical signals. In order to realize that the signals received by the second interface adapter 53 can be transmitted upwards and finally reach the first main control equipment 20 or the second main control equipment 22, the second interface adapter 53 needs to perform optical-electrical conversion on the received optical signals to obtain operating status parameters in the form of electrical signals.

According to the above solution, a second interface adapter 53 and a second expander 51 are provided in the second expansion equipment 26 at the same time, and the second expansion equipment 26 is configured as a modular cabinet structure, which not only enables connection to the energy storage equipment 12, but also improves the operational safety of the second interface adapter 53 and the second expander 51. At the same time, when a fault occurs in the second expansion equipment 26, the second expansion equipment 26 can be replaced as a whole, improving the fault handling efficiency.

Please continue to refer to FIG. 5, in some embodiments, the second expander 51 includes a third expansion board 511 and a fourth expansion board 512, the first main control equipment 20, the second main control equipment 22, and the first expansion equipment 41 are respectively connected to the third expansion board 511, the first main control equipment 20, the second main control equipment 22, and the first expansion equipment 41 are respectively connected to the fourth expansion board 512, and the third expansion board 511 and the fourth expansion board 512 are respectively connected to the second interface adapter 53.

Specifically, in the solution of this embodiment, the second expander 51 includes a third expansion board 511 and a fourth expansion board 512. The connection methods of the third expansion board 511 and the fourth expansion board 512 are the same. Both are connected to the first main control equipment 20, the second main control equipment 22 and the second interface adapter 53 at the same time, and can receive control signals from the first main control equipment 20 or the second main control equipment 22, feed back the operating status parameters of the energy storage equipment 12 to the first main control equipment 20 and/or the second main control equipment 22, and send the control signals to the second interface adapter 53 or receive the operating status parameters sent by the second interface adapter 53.

According to the above solution, the third expansion board 511 and the fourth expansion board 512 are designed with a redundant structure and transmit signals at the same time. When one of the expansion boards fails, the other expansion board can still be used to realize information interaction between the main control equipment and the energy storage equipment 12, improving the operational reliability of the second expansion equipment 26.

It should be pointed out that, in other embodiments, the second expander 51 can also be set to three or even more expansion boards, and the connection methods of each expansion board are the same, which can be selected according to actual needs, and will not be repeated here.

In some embodiments, the first expansion equipment 24 further includes a first power board, the first power board is disposed inside the third cabinet 42, and the first expander 41 and the first interface adapter 43 are respectively connected to the first power board.

And/or, in some embodiments, the second expansion equipment 26 further includes a second power board, the second power board is disposed inside the fourth cabinet 52, and the second expander 51 and the second interface adapter 53 are respectively connected to the second power board.

Specifically, the first power board is a circuit board that provides power to the first expander 41 and the first interface adapter 43. The second power board is a circuit board that provides power to the second expander 51 and the second interface adapter 53. In this solution, a power board is provided inside the third cabinet 42 and/or the fourth cabinet 52 to realize the power supply operation of the first expansion equipment 24 and/or the second expansion equipment 26, and improve the operational endurance capability of the first expansion equipment 24 and the second expansion equipment 26.

In some embodiments, the number of the first main control equipment 20, the second main control equipment 22, the first expansion equipment 24, and the second expansion equipment 26 is one or more, respectively.

Specifically, in the actual energy storage valve control system construction process, the number of the first main control equipment 20, the second main control equipment 22, the first expansion equipment 24, and the second expansion equipment 26 is not unique, as long as the first main control equipment 20 and the first expansion equipment 24 form a set of energy storage valve control subsystem, and the second main control equipment 22 and the second expansion equipment 26 form a set of energy storage valve control subsystem, and the two sets of energy storage valve control subsystems are mutually redundant; or the first main control equipment 20 and the second expansion equipment 26 form a set of energy storage valve control subsystem, and the second main control equipment 22 and the first expansion equipment 24 form a set of energy storage valve control subsystem, and the two sets of energy storage valve control subsystems are mutually redundant. In each set of energy storage valve control subsystems, one or more main control equipment and expansion equipment can be set respectively, which is not specifically limited.

In a more detailed embodiment, the number of the first main control equipment 20, the second main control equipment 22, the first expansion equipment 24, and the second expansion equipment 26 can be set to be the same, and each is one or more.

When the number of the first main control equipment 20, the second main control equipment 22, the first expansion equipment 24, and the second expansion equipment 26 is one, the first main control equipment 20 is connected to the second main control equipment 22, the first main control equipment 20 and the second main control equipment 22 are respectively connected to the first expansion equipment 24, the first main control equipment 20 and the second main control equipment 22 are respectively connected to the second expansion equipment 26, and the first expansion equipment 24 is connected to the second expansion equipment 26.

Further, the number of the first main control equipment 20, the second main control equipment 22, the first expansion equipment 24, and the second expansion equipment 26 can also be set to multiple. For ease of understanding, two are taken as an example for explanation. At this time, the first first main control equipment 20 is connected to the first second main control equipment 22, the first first main control equipment 20 and the first second main control equipment 22 are respectively connected to the first first expansion equipment 24, the first first main control equipment 20 and the first second main control equipment 22 are respectively connected to the first second expansion equipment 26, and the first first expansion equipment 24 is connected to the first second expansion equipment 26. Correspondingly, the second first main control equipment 20 is connected to the second second main control equipment 22, the second first main control equipment 20 and the second second main control equipment 22 are respectively connected to the second first expansion equipment 24, the second first main control equipment 20 and the second second main control equipment 22 are respectively connected to the second second expansion equipment 26, and the second first expansion equipment 24 is connected to the second second expansion equipment 26.

In other embodiments, the number of the first main control equipment 20, the second main control equipment 22, the first expansion equipment 24, and the second expansion equipment 26 can also be set to be not completely the same. For example, at least one of the first main control equipment 20, the second main control equipment 22, the first expansion equipment 24, and the second expansion equipment 26 is set to multiple, and the other equipment is set to one; or the first main control equipment 20, the second main control equipment 22, the first expansion equipment 24, and the second expansion equipment 26 are all set to multiple, but the numbers are not completely the same. The specifics are not limited and can be selected according to the actual scenario.

For ease of understanding, the following explanation is based on the example that the number of the first main control equipment 20 is set to two, and the number of the second main control equipment 22, the first expansion equipment 24, and the second expansion equipment 26 is set to one. At this time, it is necessary to connect the first first main control equipment 20 and the second first main control equipment 20 to the second main control equipment 22, respectively. The first first main control equipment 20, the second first main control equipment 20, and the second main control equipment 22 are respectively connected to the first expansion equipment 24. The first first main control equipment 20, the second first main control equipment 20, and the second main control equipment 22 are respectively connected to the second expansion equipment 26, and the first expansion equipment 24 is connected to the second expansion equipment 26.

Furthermore, the following explanation is based on the example that the number of the first main control equipment 20 and the second main control equipment 22 is set to two, and the number of the first expansion equipment 24 and the second expansion equipment 26 is set to one. At this time, it is necessary to connect the first first main control equipment 20 and the second first main control equipment 20 to the first second main control equipment 22, respectively. The first first main control equipment 20 and the second first main control equipment 20 are respectively connected to the second second main control equipment 22. the first first main control equipment 20, the second first main control equipment 20, the first second main control equipment 22, and the second second main control equipment 22 are respectively connected to the first expansion equipment 24. the first first main control equipment 20, the second first main control equipment 20, the first second main control equipment 22, and the second second main control equipment 22 are respectively connected to the second expansion equipment 26, and the first expansion equipment 24 is connected to the second expansion equipment 26.

In actual energy storage scenarios, according to the different number of energy storage equipment 12, the corresponding number of expansion equipment required will also be different. If one expansion equipment can realize the connection of all energy storage equipment 12, then two sets of mutually redundant energy storage valve control subsystems can be set to meet the needs, that is, at this time, only one first main control equipment 20, one second main control equipment 22, one first expansion equipment 24, and one second expansion equipment 26 need to be set.

However, in actual energy storage scenarios, the number of energy storage equipment 12 is often large, and the number of energy storage equipment 12 that one expansion equipment can connect to is limited. Therefore, only one expansion equipment cannot realize the connection of all energy storage equipment 12, and different expansion equipment needs to be set to realize the connection operation of different energy storage equipment 12. In this case, multiple sets of two mutually redundant energy storage valve control subsystems need to be set to meet the operation requirements of all energy storage equipment 12. The structure of each set of two mutually redundant energy storage valve control subsystems is the same, as shown in the above embodiments and figures, and will not be repeated here.

According to the above solution, one or more sets of mutually redundant energy storage valve control subsystem structures can be set according to actual scenarios, so that all energy storage equipment 12 can be connected to the energy storage valve control system 10 for operation, improving the operational reliability of the energy storage equipment.

To facilitate understanding of the technical solutions of the present application, the present application will be explained below in conjunction with more detailed embodiments.

In the solution of this embodiment, the number of the energy storage equipment 12 is 60, and only one set of two mutually redundant energy storage valve control subsystems needs to be set to meet the requirements. Correspondingly, the first main control equipment 20 and the first expansion equipment 24 serve as a set of energy storage valve control subsystems and are in operation; the second main control equipment 22 and the second expansion equipment 26 serve as another set of energy storage valve control subsystems and are in the cold standby state. During the operation of the energy storage equipment, after the operating status parameters generated by each energy storage equipment 12 are converted into optical signals, they are transmitted to the first interface adapter 43 of the first expansion equipment 24 through optical fibers. At the first interface adapter 43, optical-electrical conversion is performed to obtain operating status parameters in the form of electrical signals, which are transmitted to the first expansion board 411 and the second expansion board 412. The first expansion board 411 and the second expansion board 412 respectively transmit the operating status parameters to the first main controller 33 of the first main control equipment 20. At this time, the second main controller 37 of the second main control equipment 22 can communicate with the first main controller 33 to obtain the operating status of the first main controller 33 in real time, which is convenient for subsequent takeover.

The first expansion board 411 and the second expansion board 412 also respectively send the operating status parameters to the third expansion board 511 and the fourth expansion board 512 of the second expansion equipment 26, and the communication status monitoring between the energy storage equipment 12 and the first expansion equipment 24 is realized through the third expansion board 511 and the fourth expansion board 512. Specifically, it is detected whether the operating parameters transmitted between each energy storage equipment 12 and the first interface adapter 43 have communication heartbeat indicators according to the transmission communication cycle; if a single cycle communication abnormality occurs, it indicates that there is an abnormal development trend at this location; if the abnormal development trend occurs continuously within a certain period of time, the abnormality is confirmed and marked, and it is considered that the energy storage equipment 12 has an abnormal development trend. At this time, a disconnection instruction will be returned to the first expansion equipment 24, controlling the first interface adapter 43 of the first expansion equipment 24 not to emit light, disconnecting the connection with each energy storage equipment 12, and at the same time controlling the second interface adapter 53 of the second expansion equipment 26 to emit light, realizing the connection with each energy storage equipment 12. If no abnormality occurs in the first main control equipment 20 during this process, an energy storage valve control subsystem may be formed by the first main control equipment 20 and the second expansion equipment 26 to achieve protection and control of the energy storage equipment 12; alternatively, an energy storage valve control subsystem may be formed by the second main control equipment 22 and the second expansion equipment 26 to achieve protection and control of the energy storage equipment 12. Therefore, cessation of operation of the energy storage equipment 12 is mitigated, enhancing the operational reliability of the energy storage equipment, while reducing the uplink and downlink communication quantity between the energy storage equipment 12 and the expansion equipment, thereby lowering uplink and downlink latency.

Referring to FIG. 6, the present application also provides energy storage equipment comprising energy storage equipment 12 and the energy storage valve control system 10 according to any one of the embodiments described above, wherein the first expansion equipment and the second expansion equipment are respectively connected to the energy storage equipment 12 (connection relationships not shown in the figure).

Specifically, the structure of the energy storage valve control system 10 is as shown in the above embodiments and drawings. The specific type of the energy storage equipment is not unique and may include battery energy storage equipment, without specific limitation. More specifically, in a detailed embodiment, the energy storage equipment is high-voltage direct-connected energy storage equipment. In one embodiment, the high-voltage direct-connected energy storage equipment is configured between high-voltage direct current transmission lines, and the energy storage equipment may further include an isolating switch, a starting resistor, a current measurement unit, and an energy storage reactor. The current measurement unit is configured to collect current data of a direct-connected main branch, while the isolating switch, the starting resistor, and the energy storage reactor enhance the safety and stable operation of the energy storage equipment. The specific structure of the energy storage valve control system 10 is as shown in the above embodiments and drawings and is not repeated herein. In the approach of this embodiment, the configuration of the energy storage valve control system 10 eliminates the need for communication optical fiber setup among each energy storage equipment 12, mitigating local wiring crossover layout issues and further enhancing the operational reliability of the energy storage equipment.

The energy storage equipment described above adopts a redundancy configuration for the main control equipment and the expansion equipment. During actual operation, protection and control of the energy storage equipment within the energy storage system are achieved through one main control equipment and one expansion equipment, while the other main control equipment and the other expansion equipment serve as backups. The expansion equipment in the backup state is connected to the expansion equipment in the operating state to monitor the expansion equipment in the operating state. The main control equipment in the backup state is connected to the main control equipment in the operating state to monitor the main control equipment in the operating state. Upon detection of an abnormality during monitoring, a timely switch to the main control equipment in the backup state and/or the expansion equipment in the backup state is enabled. Through this solution, the energy storage valve control system is configured with redundancy, mitigating scenarios where the energy storage valve control system ceases operation due to a communication circuit fault in a single energy storage equipment or a fault in a single expansion equipment, thereby effectively improving the operational reliability of energy storage equipment such as high-voltage direct-connected types.

In some embodiments, the energy storage equipment 12 includes a power module and an energy storage module, wherein the first expansion equipment 24 and the second expansion equipment 26 are respectively configured to connect to the power module, and the power module is connected to the energy storage module.

Specifically, the energy storage module is a module for achieving electrical energy storage, while the power module is a module for controlling and adjusting the energy storage module. The specific type of the power module is not unique and may include topologies such as half-bridge, full-bridge, or quasi-full-bridge, without specific limitation. The power module may further include a power module controller, a bypass switch, and a voltage equalizing circuit. The power module controller achieves control and protection of the entire power module; the bypass switch rapidly bypasses and removes a faulty energy storage module; under the action of a switching signal from the power module controller, charge and discharge of the energy storage module are achieved, with the voltage equalizing circuit balancing sub-module voltage of the energy storage equipment 12.

The energy storage module includes an electrical cabinet formed by series connection and/or parallel connection of battery packs, specifically including a battery pack management unit, a current sampling unit, and series-connected and/or parallel-connected battery cabinets, without specific limitation. The battery pack management unit provides monitoring and protection for the entire electrical cabinet, performing SOC (state of charge) estimation and inter-cabinet equalization control; the current sampling unit performs current sampling of a branch; the battery cabinet includes batteries and a battery monitoring unit (cell supervisor controller, CSC), wherein the CSC performs voltage sampling, temperature and humidity sampling, and intra-cabinet equalization control of the batteries.

According to the above solution, the energy storage equipment specifically includes two parts: a power module and an energy storage module. Under the control of the energy storage valve control system, it can realize electrical energy storage and charge and discharge control of the energy storage module, and finally realize high-voltage direct-connected energy storage, which is convenient for electrical energy storage and retrieval.

Finally, it should be noted that the above embodiments are only for the purpose of illustrating the technical solutions of the present application and are not to be construed as limiting the present application. Although the present application has been described in detail with reference to the above embodiments, it should be understood by a person of ordinary skill in the art that modifications may be made to the technical solutions described in the above embodiments, or equivalent replacement may be made to some or all of the technical features thereof. However, the modifications or replacements do not make the nature of corresponding technical solutions depart from the scope of the technical solutions of the embodiments of the present application, all of which shall fall within the scope of the claims and the description of the present application. In particular, the technical features mentioned in the embodiments may be combined in any manner provided that there is no structural conflict. The present application is not limited to the specific embodiments disclosed herein, but includes all technical solutions falling within the scope of the claims.

## Claims

1. An energy storage valve control system, comprising:
a first main control equipment;
a second main control equipment, the first main control equipment connected to the second main control equipment;
a first expansion equipment, the first main control equipment and the second main control equipment respectively connected to the first expansion equipment; the first expansion equipment configured to connect to an energy storage equipment;
a second expansion equipment, the first main control equipment and the second main control equipment respectively connected to the second expansion equipment, the first expansion equipment connected to the second expansion equipment; the second expansion equipment configured to connect to an energy storage equipment.

2. The energy storage valve control system according to claim 1, wherein, when the energy storage valve control system is operating, any one of the first expansion equipment and the second expansion equipment is connected to the energy storage equipment, and if there is an abnormal development trend in the energy storage equipment, the other expansion equipment replaces the currently operating expansion equipment to connect to the energy storage equipment.

3. The energy storage valve control system according to claim 1 or 2, wherein, when the energy storage valve control system is operating, any one of the first main control equipment and the second main control equipment, and any one of the first expansion equipment and the second expansion equipment are in an operating state, and the other main control equipment and the other expansion equipment are in a cold standby state.

4. The energy storage valve control system according to any one of claims 1-3, wherein, the first main control equipment comprises a first cabinet and a first main controller, the first main controller is disposed inside the first cabinet, and the second main control equipment, the first expansion equipment, and the second expansion equipment are respectively connected to the first main controller;
and/or, the second main control equipment comprises a second cabinet and a second main controller, the second main controller is disposed inside the second cabinet, and the first main control equipment, the first expansion equipment, and the second expansion equipment are respectively connected to the second main controller.

5. The energy storage valve control system according to any one of claims 1-4, wherein, the first expansion equipment comprises a first expander, a first interface adapter, and a third cabinet, the first expander and the first interface adapter are respectively disposed inside the third cabinet, the first main control equipment, the second main control equipment, and the second expansion equipment are respectively connected to the first expander, the first expander is connected to the first interface adapter, and the first interface adapter is configured to connect to the energy storage equipment.

6. The energy storage valve control system according to claim 5, wherein, the first expander comprises a first expansion board and a second expansion board, the first main control equipment, the second main control equipment, and the second expansion equipment are respectively connected to the first expansion board, the first main control equipment, the second main control equipment, and the second expansion equipment are respectively connected to the second expansion board, and the first expansion board and the second expansion board are respectively connected to the first interface adapter.

7. The energy storage valve control system according to claim 5 or 6, wherein, the second expansion equipment comprises a second expander, a second interface adapter, and a fourth cabinet, the second expander and the second interface adapter are respectively disposed inside the fourth cabinet, the first main control equipment, the second main control equipment, and the first expansion equipment are respectively connected to the second expander, the second expander is connected to the second interface adapter, and the second interface adapter is configured to connect to the energy storage equipment.

8. The energy storage valve control system according to claim 7, wherein, the second expander comprises a third expansion board and a fourth expansion board, the first main control equipment, the second main control equipment, and the first expansion equipment are respectively connected to the third expansion board, the first main control equipment, the second main control equipment, and the first expansion equipment are respectively connected to the fourth expansion board, and the third expansion board and the fourth expansion board are respectively connected to the second interface adapter.

9. The energy storage valve control system according to claim 7, wherein, the first expansion equipment further comprises a first power board, the first power board is disposed inside the third cabinet, and the first expander and the first interface adapter are respectively connected to the first power board;
and/or, the second expansion equipment further comprises a second power board, the second power board is disposed inside the fourth cabinet, and the second expander and the second interface adapter are respectively connected to the second power board.

10. The energy storage valve control system according to any one of claims 1-9, wherein, the number of the first main control equipment, the second main control equipment, the first expansion equipment, and the second expansion equipment is one or more, respectively.

11. An energy storage equipment, comprising an energy storage equipment and the energy storage valve control system according to any one of claims 1-10, wherein the first expansion equipment and the second expansion equipment are respectively connected to the energy storage equipment.

12. The energy storage equipment according to claim 11, wherein, the energy storage equipment comprises a power module and an energy storage module, the first expansion equipment and the second expansion equipment are respectively configured to connect to the power module, and the power module is connected to the energy storage module.
